# EUROPEAN PATENT APPLICATION

(11) **EP 4 654 639 A1**
(43) Date of publication of application: **26.11.2025**
(21) Application number: 24744935.8
(22) Date of filing: 19.01.2024
(51) Int. Cl.: H04W 8/24, G06N 20/00, H04W 72/21, H04W 24/10

(54) **METHOD AND DEVICE FOR TRANSMISSION OR RECEPTION OF CAPABILITY INFORMATION IN WIRELESS COMMUNICATION SYSTEM**

(30) Priority: 20.01.2023 KR 20230009002
(71) Applicant: LG Electronics Inc., Yeongdeungpo-gu Seoul 07336 (KR)
(72) Inventor: KANG, Jiwon, Seoul 06772 (KR); KIM, Hyungtae, Seoul 06772 (KR); PARK, Haewook, Seoul 06772 (KR)
(74) Representative: Mooser, Sebastian Thomas
(86) International application number: PCT/KR2024/000986
(87) International publication number: WO 2024/155156

(57) **Abstract**

A method performed by a terminal in a wireless communication system according to an embodiment of the present specification comprises the steps of: transmitting capability information; and transmitting information related to one or more capability values based on range information. The capability information comprises the range information related to at least one capability value. The at least one capability value is related to at least one feature supported by the terminal.

## Description

### [TECHNICAL FIELD]

The present disclosure relates to a method and a device for transmission and reception of capability information in a wireless communication system.

### [BACKGROUND]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to be able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

Different capabilities/features can be implemented for each UE in a cellular communication system, so that a procedure in which the UE reports the capabilities/features to the base station/network is performed. Since the capabilities/features are determined at the time of UE implementation, a procedure of reporting the capability is performed only once.

When a communication function is implemented based on a model, the function can be implemented in a single model or a plurality of models. As an example, a model specific to a scenario/configuration/environment according to an environment in which the function operates can be implemented. When a specific communication function is implemented in the plurality of models, a performance/capability can be different for each model. Therefore, the capability of the UE for the same communication function can be changed according to a model change.

### [DISCLOSURE]

### [TECHNICAL PROBLEM]

When the communication function is implemented based on the plurality of models as described above, the capability of the UE which is dynamically changed cannot be reported through an existing UE capability reporting procedure (which is performed only once).

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a user equipment (UE) in a wireless communication system according to an embodiment of the present disclosure comprises transmitting capability information, and transmitting information related to one or more capability values based on the range information. The capability information includes range information related to at least one capability value.

The at least one capability value is related to at least one feature supported by the UE.

The at least one capability value may include a value related to at least one of i) channel state information (CSI), ii) prediction related to the CSI and/or a beam, iii) positioning, and/or iv) a model.

The value related to the CSI may include at least one of i) a maximum CSI compression ratio, ii) a maximum payload size for CSI compression, iii) a supported pre/post processing mode, and/or iv) a compression quality indicator.

The prediction may be related to a time domain or a spatial domain.

The value related to the prediction in the time domain may include at least one of i) a predictable maximum time instance and/or ii) prediction accuracy.

The value related to the prediction in the spatial domain may include at least one of i) a maximum supportable ratio of a first set related to measurement of a reference signal (RS) and a second set of the prediction, and/or ii) a size of the second set.

The capability value related to the positioning may include a positioning accuracy related metric.

The value related to the model may include at least one of i) a value related to whether fine-tuning related to the model is supported, ii) a minimum time required for training, update, fine-tuning, switching, or selection of the model, and/or iii) a value related to fallback of a communication function based on the model.

The range information may include at least one of i) candidate values of each capability value, ii) a minimum value of each capability value, and/or iii) a maximum value of each capability value.

One or more capability values based on the range information may include a capability value based on each of one or more time instances.

The one or more time instances may be related to at least one of i) a first time point related to transmission of the information and/or ii) a second time point which is a predetermined time after the first time point.

The method may further comprise receiving a configuration based on the capability information.

The configuration based on the capability information may include at least one of i) a configuration related to reporting of the one or more capability values and/or ii) an initial configuration related to the at least one feature.

The method may further comprise receiving a configuration based on the one or more capability values.

The configuration based on the one or more capability values may include information for a configuration or a reconfiguration related to the at least one feature.

A lowest capability value among the capability values based on the range information may be applied before the transmission of the information related to the one or more capability values.

A capability value related to a fallback mode may be applied before the transmission of the information related to the one or more capability values.

The capability information may further include information related to an initial capability value. The initial capability value may be related to a fallback mode.

A user equipment operating in a wireless communication system according to another embodiment of the present disclosure comprises one or more transceivers, one or more processors, and one or more memories connected to the one or more processors and storing instructions.

The instructions configure the one or more processors to perform all steps of any one of the above-described methods based on being executed by the one or more processors.

A device according to another embodiment of the present disclosure comprises one or more memories and one or more processors operably connected to the one or more memories.

The one or more memories store instructions that configure the one or more processors to perform all steps of any one of the above-described methods based on being executed by the one or more processors.

One or more non-transitory computer readable mediums according to another embodiment of the present disclosure store instructions. The instructions executable by one or more processors configure the one or more processors to perform all steps of any one of the above-described methods.

A method performed by a base station in a wireless communication system according to another embodiment of the present disclosure comprises receiving capability information, and receiving information related to one or more capability values based on the range information. The capability information includes range information related to at least one capability value. The at least one capability value is related to at least one feature supported by a UE.

A base station operating in a wireless communication system according to another embodiment of the present disclosure comprises one or more transceivers, one or more processors, and one or more memories connected to the one or more processors and storing instructions.

The instructions configure the one or more processors to perform all steps of any one of the above-described methods based on being executed by the one or more processors.

### [ADVANTAGEOUS EFFECTS]

According to an embodiment of the present disclosure, one or more capability values based on range information are reported.

Thus, the network can be informed of information about (dynamic) variation situations related to communication functions due to factors such as model change, model re-training, model update, and the like.

In addition, a configuration of the UE related to the communication function (e.g., CSI compression, CSI/beam prediction, positioning, etc.) can be changed/updated to a configuration suitable for the capability of the current UE.

In addition, the performance of the communication function based on a model may be optimized according to a dynamically varying UE capability.

Advantages which can be obtained in the present disclosure are not limited to the aforementioned effects and other unmentioned effects will be clearly understood by those skilled in the art from the following description.

### [BRIEF DESCRIPTION OF THE DRAWINGS]

FIG. 1 illustrates a functional framework of an AI/ML model.
FIG. 2 illustrates an operation related to UE capability transfer.
FIG. 3 illustrates a signaling procedure according to an embodiment of the present disclosure.
FIG. 4 is a flow chart illustrating a method performed by a user equipment according to an embodiment of the present disclosure.
FIG. 5 is a flow chart illustrating a method performed by a base station according to another embodiment of the present disclosure.
FIG. 6 illustrates configuration of a first device and a second device according to an embodiment of the present disclosure.

### [DETAILED DESCRIPTION]

A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), AR(Augmented Reality) device, VR(Virtual Reality) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, an Unmanned Aerial Vehicle (UAV), AR(Augmented Reality) device, VR(Virtual Reality) device, and the like.

### AI/ML related Description

With the technological advancement of artificial intelligence/machine learning (AI/ML), node(s) and UE(s) constituting a wireless communication network are becoming more intelligent/advanced.

In particular, due to the intelligence of networks/base stations, it is expected that various network/base station decision parameters can be quickly optimized and derived/applied based on various environmental parameters.

The environmental parameters may include at least one of distribution/location of base stations, distribution/location/material of buildings/furniture, etc., location/movement direction/speed of UEs, or climate information. However, the above-described parameters are only examples, and the environmental parameters may further include other environmental parameters related to the network/base station decision parameters in addition to the listed parameters.

The network/base station decision parameters may include at least one of transmission/reception power of each base station (BS), transmission power of each UE, precoder/beam of BS/UE, time/frequency resource allocation for each UE, or duplex method of each BS. However, the above-described parameters are only examples, and the network/base station decision parameters may further include other parameters determined by the network/base station in addition to the listed parameters.

In line with this trend, many standardization organizations (e.g., 3GPP, O-RAN) are considering introduction of AI/ML, and studies on this are also actively underway.

The AI/ML may be easily referred to as artificial intelligence based on deep learning in a narrow sense, but conceptually, it may be classified as below.
- Artificial Intelligence: it is any automation that allows machines to do the work that people would otherwise do.
- Machine Learning: it refers to a technology in which machines learn patterns for decision-making from data on their own without explicitly programming rules.
- Deep Learning: it is an artificial neural network-based model, and allows machines to perform feature extraction and decision from unstructured data at once. This algorithm depends on a multilayer network consisting of interconnected nodes for feature extraction and transformation, inspired by biological nervous systems, i.e., neural networks. A common deep learning network architecture includes deep neural network (DNN), recurrent neural network (RNN), and convolutional neural network (CNN).

As above, artificial intelligence (AI) is the broadest concept of AI/ML, and deep learning is the narrowest concept of AI/ML. Machine learning (ML) may be interpreted as a narrower concept than artificial intelligence and a broader concept than deep learning.

Types of AI/ML based on various criteria
- Offline vs Online

### Offline Learning

- Offline learning faithfully follows a sequential procedure of database collection, learning, and prediction. That is, the collection and learning may be performed offline, and the completed program may be installed in the field and used for prediction work. In most situations, such offline learning methods are used.

### Online Learning

- Online learning refers to a method of gradually improving performance by incrementally learning with additional data generated, taking advantage of the fact that data that can be used for recent learning is continuously generated via the Internet.

### Classification based on AI/ML Framework concept

- Centralized Learning

In centralized learning, when training data collected from multiple different nodes is reported to a centralized node, all data resources/storage/learning (e.g., supervised learning, unsupervised learning, reinforcement learning, etc.) are performed in one centralized node.
- Federated Learning

Federated learning is constructed based on data in which a collective model exists across individually distributed data owners. Instead of collecting data into the model, AI/ML models are imported into a data source, allowing local nodes/individual devices to collect data and train their own copies of the model, so there is no need to report source data to a centralized node.

In the federated learning, parameters/weight of the AI/ML model is sent again to the centralized node to support general model training. The federated learning has advantages in terms of increase in computation speed and information security. That is, a process of uploading personal data to a central server is unnecessary, and leakage and misuse of personal information can be prevented.
- Distributed Learning

Distributed learning refers to a concept that machine learning processes are scaled and distributed across a cluster of nodes. Training models are shared across multiple nodes split and operating simultaneously to speed up model training.

### Classification according to learning method

- Supervised Learning

Supervised learning is a machine learning task that aims to learn a mapping function from input to output, given a labeled data set. The input data is called training data and has known labels or results. Examples of the supervised learning are as follows.
1) Regression: Linear Regression, Logistic Regression
2) Instance-based Algorithms: k-Nearest Neighbor (KNN)
3) Decision Tree Algorithms: CART
4) Support Vector Machines: SVM
5) Bayesian Algorithms: Naive Bayes
6) Ensemble Algorithms: Extreme Gradient Boosting, Bagging: Random Forest

Supervised learning may be further grouped into regression and classification problems, where classification is predicting labels and regression is predicting quantities.
- Unsupervised Learning

Unsupervised learning is a machine learning task that aims to learn functions that describe hidden structures in unlabeled data. The input data is not labeled and there are no known results. Some examples of unsupervised learning include K-means clustering, Principal Component Analysis (PCA), nonlinear Independent Component Analysis (ICA), and long short-term memory (LSTM).
- Reinforcement Learning

In reinforcement learning (RL), an agent aims to optimize long-term goals by interacting with the environment based on a trial and error process, and is goal-oriented learning based on interaction with the environment. Examples of RL algorithm are as follows.
1) Q-learning
2) Multi-armed bandit learning
3) Deep Q Network
4) State-Action-Reward-State-Action (SARSA)
5) Temporal Difference Learning
6) Actor-critic reinforcement learning
7) Deep deterministic policy gradient
8) Monte-Carlo tree search

The reinforcement learning can be additionally grouped into model-based reinforcement learning and model-free reinforcement learning.

Model-based reinforcement learning: it refers to an RL algorithm that uses a predictive model, and obtains the transition probabilities between states using various dynamic states of the environment and a model in which these states lead to rewards.

Model-free reinforcement learning: it refers to a RL algorithm based on value or policy that achieves the maximum future reward. Multi-agent environments/states are computationally less complex and do not require an accurate representation of the environment.

RL algorithms can also be classified into value-based RL vs. policy-based RL, policy-based RL vs. non-policy RL, etc.

### Representative Model of Deep Learning

1. Feed-Forward Neural Network (FFNN)
   FFNN consists of an input layer, a hidden layer, and an output layer.
2. Recurrent Neural Network (RNN)
   RNN is a type of artificial neural network in which hidden nodes are connected to directed edges to form a directed cycle. It is a model suitable for processing data that sequentially appears, such as voice and text.
3. Convolution Neural Network (CNN)
   CNN is used for two purposes of reducing model complexity and extracting good features by applying convolution operations generally used in video processing or image processing fields.
   - Kernel or filter: it refers to a unit/structure that applies weight to an input of a specific range/unit.
   - Stride: it refers to a range of movement of the kernel within the input.
   - Feature map: it refers to a result of applying the kernel to the input.
   - Padding: it refers to a value added to adjust the size of the feature map.
   - Pooling: it refers to an operation to reduce the size of the feature map by downsampling the feature map (e.g., max pooling, average pooling).
4. Auto Encoder

An auto encoder refers to a neural network that receives a feature vector x as input and outputs the same or similar vector x' . An input node and an output node of the auto encoder have the same feature.

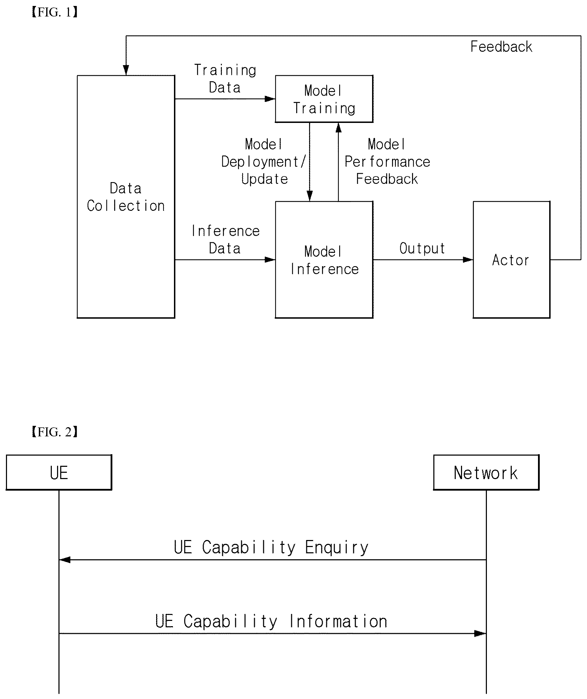

FIG. 1 illustrates a functional framework of an AI/ML model.

In the functional framework illustrated in FIG. 1, the definition of each term and the operation of each function may be based on Table 1 below.

**[Table 1]**

| |
|---|
| Data collection: Data collected from the network nodes, management entity or UE, as a basis for ML model training, data analytics and inference. |
| ML Model: A data driven algorithm by applying machine learning techniques that generates a set of outputs consisting of predicted information, based on a set of inputs |
| ML Training: An online or offline process to train an ML model by learning features and patterns that best present data and get the trained ML model for inference. |
| ML Inference: A process of using a trained ML model to make a prediction or guide the decision based on collected data and ML model. |
| • Data Collection is a function that provides input data to Model training and Model inference functions. AI/ML algorithm specific data preparation (e.g., data pre-processing and cleaning, formatting, and transformation) is not carried out in the Data Collection function. |
| Examples of input data may include measurements from UEs or different network entities, feedback from Actor, output from an AI/ML model. |
| ∘ Training Data: Data needed as input for the AI/ML Model Training function. |
| ∘ Inference Data: Data needed as input for the AI/ML Model Inference function. |
| • Model Training is a function that performs the ML model training, validation, and testing which may generate model performance metrics as part of the model testing procedure. The Model Training function is also responsible for data preparation (e.g. data pre-processing and cleaning, formatting, and transformation) based on Training Data delivered by a Data Collection function, if required. |
| ∘ Model Deployment/Update: Used to initially deploy a trained, validated, and tested AI/ML model to the Model Inference function or to deliver an updated model to the Model Inference function. |
| ▪ Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study. |
| • Model Inference is a function that provides AI/ML model inference output (e.g. predictions or decisions) . Model Inference function may provide model performance feedback to Model Training function when applicable. The Model inference function is also responsible for data preparation (e.g. data pre-processing and cleaning, formatting, and transformation) based on Inference Data delivered by a Data Collection function, if required. |
| ∘ Output: The inference output of the AI/ML model produced by a Model Inference function. |
| ▪ Note: Details of inference output are use case specific. |
| ∘ Model Performance Feedback: It may be used for monitoring the performance of the AI/ML model. |
| ▪ Note: Details of the Model Performance Feedback process are out of RAN3 scope. |
| • Actor is a function that receives the output from the Model inference function and triggers or performs corresponding actions. The Actor may trigger actions directed to other entities or to itself. |
| Feedback: Information that may be needed to derive training or inference data or performance feedback. |

### Data Set

A data set used in AI/ML is classified into training data, validation data, and test data, and their definition is as follows.
- Training data

Data set for training a model
- Validation data

Data set for verifying a model whose training has been already completed

The validation data is a data set usually used to prevent over-fitting of a training data set.

The validation data is a data set for selecting the best among various models trained during the training process. Therefore, the validation data may be seen as a data set related to training.
- Test data

The test data is a data set for final evaluation. The test data is independent of training.

The data set may use a training set including the above-described data in a predetermined ratio.

For example, a training set including training data and validation data in a ratio of 8:2 or 7:3 may be used.

For example, a training set including training data, validation data, and test data in a ratio of 6:2:2 may be used.

### Collaboration level

A collaboration level can be defined as following table 2 depending on whether the AI/ML function between a base station and a UE is capable.

**[Table 2]**

| |
|---|
| **Cat 0a)** No collaboration framework: AI/ML algorithms purely implementation based and not requiring air-interface changes. -> Baseline |
| **Cat 0b)** No collaboration framework with modified Air-Interface catering to efficient implementation-based AI/ML algorithms. |
| **Cat 1)** Inter-node assistance to improve the respective nodes' AI/ML algorithms. This would apply to UEs getting assistance from gNBs (for training, adaptation, etc.) and vice-versa. This level does not require model exchange between network nodes. |
| **Cat 2)** Joint ML operation between UEs and gNBs. This level requires AI/ML model instruction or exchange between network nodes. |

The collaboration levels shown in Table 2 are examples and may be modified and utilized differently from the illustrated examples based on the implementation method. For example, a collaboration level that combines two or more of the illustrated collaboration levels may be defined/utilized. For example, collaboration level(s) excluding one or more of the illustrated collaboration levels may be utilized.

### UE capability transfer

FIG. 2 illustrates an operation related to UE capability transfer.

Referring to FIG. 2, when a UE capability transfer procedure is initiated, the UE receives a UECapabilityEnquiry from a network (e.g., base station). The UE transmits UECapabilityInformation to the network.

When receiving the UECapabilityEnquiry from the network, a specific operation in which the UE compiles and transfers the UE capability information may be based on Table 3 below.

**[Table 3]**

| |
|---|
| 5.6.1.2 Initiation |
| The network initiates the procedure to a UE in RRC_CONNECTED when it needs (additional) UE radio access capability information. The network should retrieve UE capabilities only after AS security activation. |
| Network does not forward UE capabilities that were retrieved before AS security activation to the CN. |
| 5.6.1.3 Reception of the *UECapabilityEnquiry* by the UE |
| The UE shall set the contents of *UECapabilityInformation* message as follows: |
| 1> if the *ue-CapabilityRAT-RequestList* contains a *UE-CapabilityRAT-Request* with *rat-Type* set to *nr:* |
| 2> include in the *ue-CapabilityRAT-ContainerList a UE-CapabilityRAT-Container* of the type *UE-NR-Capability* and with the *rat-Type* set to *nr*; |
| 2> include the *supportedBandCombinationList, featureSets* and *featureSetCombinations* as specified in clause 5.6.1.4; |
| 1> if the *ue-CapabilityRAT-RequestList* contains a *UE-CapabilityRAT-Request* with *rat-Type* set to *eutra-nr*: |
| 2> if the UE supports (NG)EN-DC or NE-DC: |
| 3> include in the *ue-CapabilityRAT-ContainerList a UE-CapabilityRAT-Container* of the type *UE-MRDC-Capability* and with the *rat-Type* set to *eutra-nr*; |
| 3> include the *supportedBandCombinationList* and *featureSetCombinations* as specified in clause 5.6.1.4; |
| 1> if the *ue-CapabilityRAT-RequestList* contains a *UE-CapabilityRAT-Request* with *rat-Type* set to *eutra:* |
| 2> if the UE supports E-UTRA: |
| 3> include in the *ue-CapabilityRAT-ContainerList* a *ue-CapabilityRAT-Container* of the type *UE-EUTRA-Capability* associated with the terrestrial network and with the *rat-Type* set to *eutra* as specified in TS 36.331 [10], clause 5.6.3.3, according to the *capabilityRequestFilter*, if received; |
| 1> if the *ue-CapabilityRAT-RequestList* contains a *UE-CapabilityRAT-Request* with *rat-Type* set to *utra-fdd*: |
| 2> if the UE supports UTRA-FDD: |
| 3> include the UE radio access capabilities for UTRA-FDD within a *ue-CapabilityRAT-Container* and with the *rat-Type* set to *utra-fdd*; |
| 1> if the RRC message segmentation is enabled based on the field *rrc-SegAllowed* received, and the encoded RRC message is larger than the maximum supported size of a PDCP SDU specified in TS 38.323 [5]: |
| 2> initiate the UL message segment transfer procedure as specified in clause 5.7.7; |
| 1> else: |
| 2> submit the *UECapabilityInformation* message to lower layers for transmission, upon which the procedure ends. |
| 5.6.1.4 Setting band combinations, feature set combinations and feature sets supported by the UE The UE invokes the procedures in this clause if the NR or E-UTRA network requests UE capabilities for *nr, eutra-nr* or *eutra.* This procedure is invoked once per requested *rat-Type* (see clause 5.6.1.3 for capability enquiry by the NR network; see TS 36.331 [10], clause 5.6.3.3 for capability enquiry by the E-UTRA network). The UE shall ensure that the feature set IDs are consistent across feature sets, feature set combinations and band combinations in all three UE capability containers that the network queries with the same fields with the same values, i.e. *UE-CapabilityRequestFilterNR, UE-CapabilityRequestFilterCommon* and fields in *UECapabilityEnquiry* message (i.e. *requestedFreqBandsNR-MRDC, requestedCapabilityNR, eutra-nr-only* flag, and *requestedCapabilityCommon*) as defined in TS 36.331, where applicable. |
| NOTE 1: Capability enquiry without *frequencyBandListFilter* is not supported. |
| NOTE 2: In (NG)EN-DC, the gNB needs the capabilities for RAT types *nr* and *eutra-nr* and it uses the *featureSets* in the *UE-NR-Capability* together with the *featureSetCombinations* in the *UE-MRDC-Capability* to determine the NR UE capabilities for the supported MRDC band combinations. Similarly, the eNB needs the capabilities for RAT types *eutra* and *eutra-nr* and it uses the *featureSetsEUTRA* in the *UE-EUTRA-Capability* together with the *featureSetCombinations* in the *UE-MRDC-Capability* to determine the E-UTRA UE capabilities for the supported MRDC band combinations. Hence, the IDs used in the *featureSets* must match the IDs referred to in *featureSetCombinations* across all three containers. The requirement on consistency implies that there are no undefined feature sets and feature set combinations. |
| NOTE 3: If the UE cannot include all feature sets and feature set combinations due to message size or list size constraints, it is up to UE implementation which feature sets and feature set combinations it prioritizes. |
| The UE shall: |
| 1> compile a list of "candidate band combinations" according to the filter criteria in *capabilityRequestFilterCommon* (if included), only consisting of bands included in *frequencyBandListFilter,* and prioritized in the order of *frequencyBandListFilter* (i.e. first include band combinations containing the first-listed band, then include remaining band combinations containing the second-listed band, and so on), where for each band in the band combination, the parameters of the band do not exceed *maxBandwidthRequestedDL, maxBandwidthRequestedUL, maxCarriersRequestedDL, maxCarriersRequestedUL, ca-* |
| *BandwidthClassDL-EUTRA* or *ca-BandwidthClassUL-EUTRA,* whichever are received; |
| 1> for each band combination included in the list of "candidate band combinations": |
| 2> if the network (E-UTRA) included the *eutra-nr-only* field, or |
| 2> if the requested *rat-Type* is *eutra:* |
| 3> remove the NR-only band combination from the list of "candidate band combinations"; |
| NOTE 4: The (E-UTRA) network may request capabilities for *nr* but indicate with the *eutra-nr-only* flag that the UE shall not include any NR band combinations in the *UE-NR-Capability.* In this case the procedural text above removes all NR-only band combinations from the candidate list and thereby also avoids inclusion of corresponding feature set combinations and feature sets below. |
| 2> if it is regarded as a fallback band combination with the same capabilities of another band combination included in the list of "candidate band combinations", and |
| 2> if this fallback band combination is generated by releasing at least one SCell or uplink configuration of SCell or SUL according to TS 38.306 [26]: |
| 3> remove the band combination from the list of "candidate band combinations"; |
| NOTE 5: Even if the network requests (only) capabilities for *nr,* it may include E-UTRA band numbers in the *frequencyBandListFilter* to ensure that the UE includes all necessary feature sets needed for subsequently requested *eutra-nr* capabilities. At this point of the procedure the list of "candidate band combinations" contains all NR- and/or E-UTRA-NR band combinations that match the filter (*frequencyBandListFilter*) provided by the NW and that match the *eutra-nr-only* flag (if RAT-Type *nr* is requested by E-UTRA). In the following, this candidate list is used to derive the band combinations, feature set combinations and feature sets to be reported in the requested capability container. |
| 1> if the requested *rat-Type* is *nr*: |
| 2> include into *supportedBandCombinationList* as many NR-only band combinations as possible from the list of "candidate band combinations", starting from the first entry; |
| 3> if *srs-SwitchingTimeRequest* is received: |
| 4> if SRS carrier switching is supported; |
| 5> include *srs-SwitchingTimesListNR* and *srs-SwitchingAffectedBandsListNR* for each band combination; |
| 4> set *srs-SwitchingTimeRequested* to *true;* |
| 2> include, into *featureSetCombinations,* the feature set combinations referenced from the supported band combinations as included in *supportedBandCombinationList* according to the previous; |
| 2> compile a list of "candidate feature set combinations" referenced from the list of "candidate band combinations" excluding entries (rows in feature set combinations) with |
| same or lower capabilities; |
| 2> if *uplinkTxSwitchRequest* is received: |
| 3> include into *supportedBandCombinationList-UplinkTxSwitch* as many NR-only band combinations that supported UL TX switching as possible from the list of "candidate band combinations", starting from the first entry; |
| 4> if *srs-SwitchingTimeRequest* is received: |
| 5> if SRS carrier switching is supported; |
| 6> include *srs-SwitchingTimesListNR* and *srs-SwitchingAffectedBandsListNR* for each band combination; |
| 5> set *srs-SwitchingTimeRequested* to *true;* |
| 3> include, into *featureSetCombinations,* the feature set combinations referenced from the supported band combinations as included in *supportedBandCombinationList-UplinkTxSwitch* according to the previous; |
| NOTE 6: This list of "candidate feature set combinations" contains the feature set combinations used for NR-only as well as E-UTRA-NR band combinations. It is used to derive a list of NR feature sets referred to from |
| the feature set combinations in the *UE-NR-Capability* and from the feature set combinations in a *UE-MRDC-Capability* container. |
| 2> if *sidelinkRequest* is received: |
| 3> for a sidelink band combination the UE included in *supportedBandCombinationListSidelinkEUTRA-NR, supportedBandCombinationListSL-RelayDiscovery* or *supportedBandCombinationListSL-NonRelayDiscovery*: |
| 4> if the UE supports partial sensing for a band of the sidelink band combination, include the partial sensing capabilities for the band using the *sl-TransmissionMode2-PartialSensing-r17*; |
| 3> set *sidelinkRequested* to *true;* |
| 2> include into *featureSets* the feature sets referenced from the "candidate feature set combinations" and may exclude the feature sets with the parameters that exceed any of *maxBandwidthRequestedDL, maxBandwidthRequestedUL, maxCarriersRequestedDL* or *maxCarriersRequestedUL,* whichever are received; |
| 1> else, if the requested *rat-Type* is *eutra-nr*: |
| 2> include into *supportedBandCombinationList* and/or *supportedBandCombinationListNEDC-Only* as many E-UTRA-NR band combinations as possible from the list of "candidate band combinations", starting from the first entry; |
| 3> if *srs-SwitchingTimeRequest* is received: |
| 4> if SRS carrier switching is supported; |
| 5> include *srs-SwitchingTimesListNR, srs-SwitchingTimesListEUTRA* and *srs-SwitchingAffectedBandsListNR* for each band combination; |
| 4> set *srs-SwitchingTimeRequested* to *true;* |
| 2> include, into *featureSetCombinations,* the feature set combinations referenced from the supported band combinations as included in *supportedBandCombinationList* according to the previous; |
| 2> if *uplinkTxSwitchRequest* is received: |
| 3> include into *supportedBandCombinationList-UplinkTxSwitch* as many E-UTRA-NR band combinations that supported UL TX switching as possible from the list of "candidate band combinations", starting from the first entry; |
| 4> if *srs-SwitchingTimeRequest* is received: |
| 5> if SRS carrier switching is supported; |
| 6> include *srs-SwitchingTimesListNR, srs-SwitchingTimesListEUTRA* and *srs-SwitchingAffectedBandsListNR* for each band combination; |
| 5> set *srs-SwitchingTimeRequested* to *true;* |
| 3> include, into *featureSetCombinations,* the feature set combinations referenced from the supported band combinations as included in *supportedBandCombinationList-UplinkTxSwitch* according to the previous; |
| 1> else (if the requested *rat-Type* is *eutra*): |
| 2> compile a list of "candidate feature set combinations" referenced from the list of "candidate band combinations" excluding entries (rows in feature set combinations) with same or lower capabilities; |
| NOTE 7: This list of "candidate feature set combinations" contains the feature set combinations used for E-UTRA-NR band combinations. It is used to derive a list of E-UTRA feature sets referred to from the feature set combinations in a *UE-MRDC-Capability* container. |
| 2> include into *featureSetsEUTRA* (in the *UE-EUTRA-Capability*) the feature sets referenced from the "candidate feature set combinations" and may exclude the feature sets with the parameters that exceed *ca-BandwidthClassDL-EUTRA* or *ca-BandwidthClassUL-EUTRA,* whichever are received; |
| 1> include the received *frequencyBandListFilter* in the field *appliedFreqBandListFilter* of the requested UE capability, except if the requested *rat-Type* is *nr* and the network included the *eutra-nr-only* field; |
| 1> if the network included *ue-CapabilityEnquiryExt*: |
| 2> include the received ue-CapabilityEnquiryExt in the field receivedFilters; |

The operations based on FIG. 2 and Table 3 may be implemented in combination with embodiments described below (at least one of Method 1, Method 1-1, Method 1-2 and/or Method 1-3, and an extended embodiment of Method 1).

In recent years, attempts to apply an artificial intelligence/machine learning (AI/ML) technology to wireless communication networks have been active. In particular, in 3GPP Rel-18, a study began to apply the AI/ML technology to an air interface between the UE and the network. As main use cases that combine AI/ML into the air interface in that study, beam management (BM), CSI acquisition, and positioning are considered, and in the present disclosure, a more efficient UE capability/function reporting method is proposed, according to the combination of the AI/ML technology.

In the present disclosure, '/' means 'and' , 'or,' or 'and/or' according to a context. In the present disclosure, 'terminal' and ' UE' may be used interchangeably in the same/similar meanings, and ' base station' , 'network' , and ' TRP' may also be used interchangeably in the same/analogous meanings from an air-interface perspective.

Different capabilities/features may be implemented for each UE in a cellular communication system, so that a procedure in which the UE reports the capabilities/feature to the base station/network is included. In the 3GPP system, this procedure is referred to as a UE capability reporting procedure (see FIG. 2 and Table 3).

When any communication function (feature/function/functionality, e.g., CSI, beam management, positioning, mobility, etc.) is implemented based on AI/ML, the function may be implemented in a single or multiple AI/ML model(s). For example, a scenario/configuration/environment-specific AI/ML model may be implemented according to an environment (e.g., macro cell or indoor cell, base station/UE density, UE moving speed, etc.) in which the function operates. Here, each model has the same structure (e.g., AI/ML algorithm (e.g., CNN and RNN), number of nodes, number of hidden layers, input/output parameter configuration, etc.), but the parameter set trained for the corresponding environment may be different. Alternatively, each model may have (partially) different structure as well as parameter set.

In general, the UE capability reporting procedure (e.g., see FIG. 2 and Table 3) is performed once immediately after the network connection. This is because the terminal capability/functionality is determined at the UE implementation stage and does not change in the middle. When a specific communication function is implemented in the plurality of AI/ML models, a performance/capability may be different for each model. Therefore, the capability/functionality/performance of the UE for the same communication function may be changed according to a change of the AI/ML model.

When a specific communication function is implemented with the plurality of AI/ML models, the performance/capability of each model may be different (e.g., cell movement, movement from the city center to the outskirts, change in terminal density, etc.). The capability/functionality/performance of the UE may be changed during the re-training, especially when the performance falls below a certain threshold and re-training on the model needs to be performed.

As described above, the present disclosure proposes a method in which the UE may quickly report the information to the network when the UE capability/functionality//performance is changed due to factors such as AI/ML model change, model re-training, and model update.

By applying the method in the present disclosure, the network may improve a network performance by quickly performing related configuration/indication (e.g., CSI/beam report reconfiguration, beam change, positioning related configuration, etc.) based on the corresponding report information.

### Method 1

The terminal may report (as a UE capability report) information on a range of a capability value supported by the UE in relation to a specific communication function (e.g., CSI/beam time/spatial domain prediction, CSI compression, positioning, mobility, etc.) to the network. The UE separately/together reports capability value information for a specific timing(s) of the UE (according to the AI/ML model situation (e.g. model re-training/update, model selection/switching, etc.)) in the range of the capability value.

The capability value may be the same as/similar to information reported via an existing UE capability report. As an example, the capability value may be reported based on an existing UE capability message (e.g., Table 3). As an example, the capability value may be reported based on uplink control information (UCI). As an example, the capability value may be reported based on a Medium Access Control Control Element (MAC CE).

The capability value may include information related to a performance of a communication function implemented via AI/ML. For example, the capability value may include the following information.
- CSI compression: A maximum CSI compression ratio, a maximum payload size for CSI compression, a supported pre/post processing technique/mode, a compression quality indicator (CQI), etc.
- CSI/beam time domain (TD) prediction: predictable maximum future time instance (per given channel environment(e.g., Doppler shift/spread), prediction accuracy (per time instance/duration) (per given channel environment), etc.

Beam spatial domain (SD)/TD prediction: maximum supportable ratio of Set A/Set B and/or size of Set A (for given size of Set B), etc. The information according to this example assumes a case in which estimation/prediction is performed on beam RSs of Set A based on a measurement result of beam RSs included in Set B.
- Positioning: positioning accuracy related metric etc.
- i) whether to support fine-tuning, ii) required minimum time for model (re-)training/update/fine-tuning/switching/selection, iii) scalability (e.g., the range of number of antenna ports, the maximum frequency bandwidth), etc.

When the base station does not know (or does not need to know) the configuration of the AI/ML model of the UE, the minimum time, whether fine-tuning is made, or the like may be replaced with information related to an operation in which the corresponding (AI/ML related) communication function is interrupted (e.g., an operation in a fallback mode) or an operation in which a performance is degraded (e.g., interruption time/behavior or time/behavior related to fallback mode according to NW indication/configuration and/or UE report).

According to the existing system, the UE capability values listed above to similar UE capability value information are determined at the time of UE hardware/software implementation. The UE therefore reports a fixed value related to the UE capability.

According to the proposed method, the UE reports (first) to the network the range information of capability values in which the AI/ML model is variable due to a training situation, a model change, or the like. For example, for a capability value according to the above example, range information such as information on candidate values of the corresponding value or information on a maximum/minimum value(s) may be reported as the UE capability. The following exemplifies information about a range of capability values for the capability value examples.
- CSI compression: i) candidate values or min/max value(s) of maximum CSI compression ratio, ii) candidate values or min/max value(s) of maximum payload size for CSI compression, iii) supported pre/post processing techniques/modes, iv) candidate values or min/max value(s) of CQI, etc.
- CSI/beam time domain (TD) prediction: i) candidate values or min/max value(s) of predictable maximum future time instance (per given channel environment), ii) candidate values or min/max value(s) of prediction accuracy (per time instance/duration) (per given channel environment), etc.
- Beam spatial domain (SD)/TD prediction: candidate values or min/max value(s) of maximum supportable ratio of Set A/Set B and/or candidate values or min/max value(s) of size of Set A (for given size of Set B), etc.
- Positioning: candidate values or min/max value(s) of positioning accuracy related metric, etc.
- General or use-case specific functionality: i) whether always or occasionally or not to support fine-tuning,
ii) candidate values or min/max value(s) of required minimum time for model (re-)training/update/fine-tuning/switching/selection, iii) supported range of scalability (e.g., the range of number of antenna ports, the maximum frequency bandwidth), etc.

Along with the range information of the UE capability value or after the range information report, (actual) UE capability value information (for the situation of the AI/ML model) of the current timing and/or specific future timing(s) are/is reported.

The range information of the UE capability value is information determined by the UE implementation, and thus may be reported based on the RRC layer. As an example, the range information of the UE capability value may be reported through the UE capability report procedure defined in FIG. 2 and Table 3.

The (actual) UE capability value information may be configured as separate report information (not UE capability reporting) because the (actual) UE capability value information is variable in real time. As an example, the (actual) UE capability value information may be reported based on a separate RRC message, MAC-CE, and/or UCI.

It may be assumed that the (actual) UE capability value information is configured as UCI report information. As an example, the UCI may be transmitted with a higher priority than other predefined UCIs (e.g., HARQ-ACK, scheduling request and CSI). As an example, the UCI may be transmitted at least at a higher priority than the CSI.

The report may be a periodic/aperiodic/semi-persistent report, or may be an event-driven/based report.

In the former case, the report may be made by the configuration/indication of the base station. As an example, the report may be made when the base station gives an indication to the UE regarding the change/(re-)training/update of the AI/ML model. The model change may also be made by an indication of a model ID.

In the latter case, when a state change (e.g., model change, (re)-training/update, etc.) of AI/ML of the UE occurs, the state change may be defined as information reported by the UE.

The following is an example of (actual) UE capability value information for examples of information for the range of the capability value.
- CSI compression: i) actual maximum CSI compression ratio at certain time instance(s)/duration(s)(e.g., applied currently, to be applied after X msec/slots, etc.) among the reported candidate values or min/max value(s), ii) actual maximum payload size for CSI compression at certain time instance(s)/duration(s), iii) actually supported pre/post processing technique/mode at certain time instance(s)/duration(s), and iv) actual CQI at certain time instance(s)/duration(s)
- CSI/beam time domain (TD) prediction: i) actual predictable maximum future time instance (per given channel environment) at certain time instance(s)/duration(s) among the reported candidate values or min/max value(s) and ii) actual prediction accuracy (per time instance/duration) (per given channel environment) at certain time instance(s)/duration(s) among the reported candidate values or min/max value(s)
- Beam spatial domain (SD)/TD prediction: actual maximum supportable ratio of Set A/Set B and/or actual size of Set A (for given size of Set B) at certain time instance(s)/duration(s) among the reported candidate values or min/max value(s)
- Positioning: actual positioning accuracy related metric at certain time instance(s)/duration(s) among the reported candidate values or min/max value(s)
- General or use-case specific functionality: i) whether to support fine-tuning at certain time instance(s)/duration(s) (if occasionally support fine-tuning), ii) actually required minimum time for model (re-)training/update/fine-tuning/switching/selection at certain time instance(s)/duration(s) within the reported range, and iii) actual scalability (e.g. the range of number of antenna ports, the maximum frequency bandwidth) at certain time instance(s)/duration(s) within the reported range

The following are embodiments to which the proposed method is applied.

### Exemplary procedure 1

[Step 1] UE → NW: The UE reports a candidate value range to the NW through a UE capability report.

[Step 2] NW → UE: The NW transmits information to the UE based on the report in Step 1 (i.e., the report of the candidate value range). The NW may transmit information based on at least one of the following listed examples.
i) UE reporting configuration/indication for step 3 (e.g., PUSCH/PUCCH configuration/allocation for the report in step 3), and
ii) (initial) configuration/indication of related feature(s)/parameter(s) (e.g., CSI/beam report configuration for CSI compression or CSI/beam prediction (TD prediction window, CSI compression ratio, etc.), set A/set B beam configuration, etc.)

Note: According to the step 3 UE reporting scheme, the configuration/indication for the step 3 UE report may be performed before procedure 1 (e.g., the configuration for the periodic report), before and after procedure 1, or after procedure 1 (e.g., after the RRC is configured, report activation/trigger is performed by MAC-CE/DCI). Alternatively, the configuration/indication for the step 3 UE report may be omitted (e.g., when the step 3 report is an event-based report scheme based on MAC-CE).

Therefore, the configuration/indication for the feature/parameter related to the UE capability report and the configuration/indication for the step 3 UE report may be made separately or may be made simultaneously/together.

[Step 3] UE → NW (event-based or periodic/semi-persistent/aperiodic report): The UE reports a current capability to the NW. As an example, the report may be performed based on an event. As an example, the report may be performed periodically/semi-statically/aperiodically.

As an example, the reported capability may also be a capability for a specific future timing (e.g., a timing after a reporting timing + X ms/slot, the X value may be a prescribed value, a value set/indicated by the base station, or a value selected by the UE) other than a current timing. As an example, the reported capability may include all capability information for a plurality of timings (e.g., both a capability value at a reporting timing and a capability value at a timing after the reporting timing + X ms/slot are reported).

[Step 4] NW → UE: Based on the report in step 3, the NW transmits a (re-)configuration/indication of a related feature(s)/parameter(s) to the UE.

The configuration/indication process for the feature/parameter in step 2 and the configuration/indication process for the feature/parameter in step 4 may be forwarded through the same or different signaling structures and/or messages (formats). For example, an adjustment value/offset value for the parameter value indicated in step 2 may be indicated in step 4 (e.g., an adjustment value for prediction window start timing/duration, a variation value of CSI compression ratio, and addition/deletion information for set B beams), and step 4 may be performed based on the same layer message or a lower layer message as step 2 (e.g., step 2 via RRC and step 4 via MAC-CE).

In the embodiment, when there is a time interval between reporting the range information of the UE capability value (step 1) and reporting (actual) UE capability value information of the UE (step 3), the base station may need to (initially) configure the related communication function according to the reported range information of the UE capability value. In this case, the following methods 1-1 to 1-3 may be considered.

### Method 1-1

According to the embodiment, the UE may apply/use a lowest capability value in the reported capability value range. Here, the corresponding lowest capability value may be a capability value for fallback/non-AI/ML mode to be used while AI/ML is not applied.

### Method 1-2

According to the embodiment, the UE may apply/use a specific prescribed capability value (e.g., basic/mandatory/default capability value). Here, the specific capability value may be a capability value for the fallback/non-AI/ML mode to be used while the AI/ML is not applied.

### Method 1-3

The UE may report, to the NW, (actual) UE capability value information (e.g., current/initial/default capability) applicable to an initial/current timing together with the range information of the capability value. As an example, the corresponding report may be included in an existing UE capability report and/or the information reported based on step 1.

The ' (actual) UE capability value applicable at the initial/current timing' may be a capability value related to the performance of the AI/ML model applied at the timing or a capability value for the fallback/non-AI/ML mode.

Method 1-1 is applicable even in Exemplary procedure 1. The NW may perform a configuration/indication for the feature/parameter related to the UE capability report in step 2, based on the lowest capability value in the UE report in step 1.

Step 2 of Exemplary procedure 1 is performed based on the UE report of step 1. Applying Method 1-2, an initial configuration/indication of related feature(s)/parameter(s) procedure may be performed based on the specific/prescribed capability value in step 2 above. Thus, in the case of applying Method 1-2, the corresponding procedure may also be performed regardless of the UE reporting timing of step 1.

The following is an embodiment to which Method 1-3 is applied based on Exemplary procedure 1.

### Exemplary procedure 2

[Step 1] UE → NW: The UE reports, to the NW, a candidate value range including a current/initial/default value through the UE capability report. Information based on example 1 or example 2 below may be transmitted from the UE to the NW.
Example 1) candidate values + current/initial/default value among the candidate values
Example 2) value range + current/initial/default value within the value range

[Step 2] NW → UE: The NW transmits, to the UE, information based on the report in step 1 (i.e., the report of the candidate value range including the current/initial/default value). The NW may transmit information based on at least one of the following listed examples.
i) UE reporting configuration/indication for step 3 (e.g., PUSCH/PUCCH configuration/allocation for the report in step 3), and
ii) (initial) configuration/indication of related feature(s)/parameter(s) (e.g., CSI/beam report configuration for CSI compression or CSI/beam prediction (TD prediction window, CSI compression ratio, etc.), set A/set B beam configuration, etc.)

The information based on i) and ii) may be based on the reported current/initial/default value.

[Step 3] UE → NW (event-based or periodic/semi-persistent/aperiodic report): The UE reports a current capability to the NW. As an example, the report may be performed based on an event. As an example, the report may be performed periodically/semi-statically/aperiodically.

[Step 4] NW → UE: Based on the report in step 3, the NW transmits a (re-)configuration/indication of a related feature(s)/parameter(s) to the UE.

In the proposed methods, it is assumed that the ' (actual) UE capability value' reports one value at one timing. Extending such a scheme, the following method may be considered.

### Extension of Method 1

The UE reports (as the UE capability report) information on a range of a capability value supported by the UE in relation to a specific communication function to the network.

The UE separately/together reports capability value information for a specific timing(s) (according to the AI/ML model situation (e.g. model re-training/update, model selection/switching, etc.)) in the range of the capability value. In this case, a plurality of capability values may be reported for the same timing. When the plurality of capability values are reported, the base station that receives the plurality of capability values may set/indicate a capability value to be actually applied.

The following is an embodiment to which the extension method is applied based on Exemplary procedure 1.

### Exemplary procedure 3

[Step 1] UE → NW: The UE reports a candidate value range to the NW through a UE capability report.

[Step 2] NW → UE: The NW transmits information to the UE based on the report in step 1 (i.e., the report of the candidate value range). Based on the report in step 1, the NW transmits the UE reporting configuration/indication for step 3 and/or the (initial) configuration/indication of related feature(s)/parameter(s) to the UE.

[Step 3] UE → NW (event-based or periodic/semi-persistent/aperiodic report): The UE reports a current capability to the NW. As an example, the report may be performed based on an event. As an example, the report may be performed periodically/semi-statically/aperiodically.

Here, a plurality of capability values or ranges of capability values may be reported in consideration of a capability of the AI/ML model(s)/a range of the capability applicable for a specific current/future timing. The value reported in this step may correspond to some values among the candidate values reported in step 1 or a partial range within the range reported in step 1.

[Step 4] NW → UE: Based on the report in step 3, the NW transmits a (re-)configuration/indication of an actual capability to be applied and related feature(s)/parameter(s) to the UE. In this step, the base station may set/indicate the plurality of capability values or the actual capability value to be applied within the range of the capability value reported in step 3. Alternatively, the information (actual capability value to be applied) may be implicitly configured/indicated through the configuration/indication for the related parameter/feature.

In the present disclosure, 'beam' may mean a source RS for a 'spatial filter' or a 'spatial relation' , and may be interpreted as a QCL (type-D) RS or a TCI state or (in case of uplink) a spatial relation RS.

Although the proposed technologies of the present disclosure are described based on UE AI/ML, this does not mean that the technologies of the present disclosure may be applied only in an AI/ML implementation environment of the UE, but the proposed technologies may also be applied in a UE AI/ML implementation environment of another apparatus/entity/device other than the UE or a non-AI/ML implementation environment. Further, another UE is applied instead of the base station/NW, and may also be applied to sidelink communication. In addition, the technology in the present disclosure may also be utilized/applied in another environment and use case where the capability value of the UE is variable due to another factor other than the AI/ML.

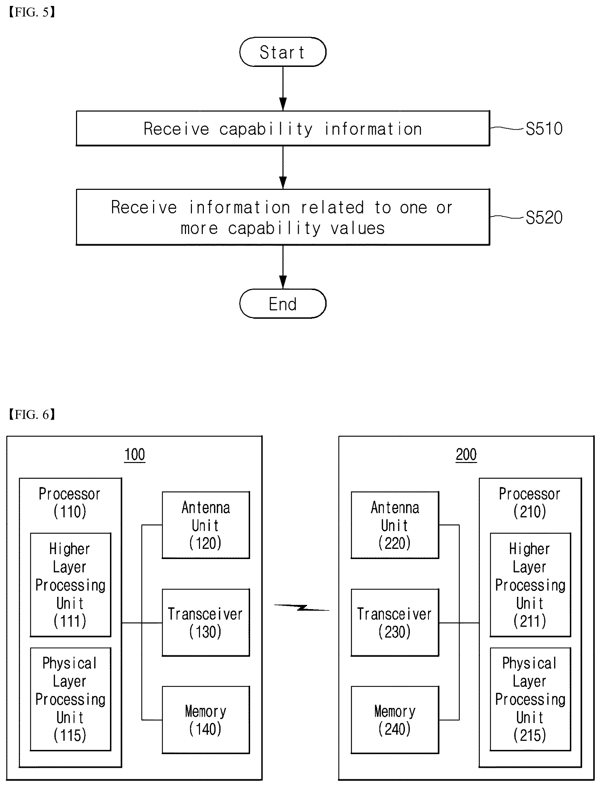

In terms of implementation, the operations of the base station/UE according to the above-described embodiments (e.g., operations based on at least one of Method 1, Method 1-1, Method 1-2, Method 1-3, and/or an extended embodiment of Method 1) may be processed by devices in FIG. 6 described below (e.g., processors 110 and 210 in FIG. 6).

Further, the operations of the base station/UE according to the above-described embodiments (e.g., operations based on at least one of Method 1, Method 1-1, Method 1-2, Method 1-3, and/or the extended embodiment of Method 1) may be stored in memories (e.g., 140 and 240 in FIG. 6) in the form of commands/programs (e.g., instructions and executable codes) for driving at least one processor (e.g., 110 or 210 in FIG. 6).

Hereinafter, a signaling procedure based on the above-described embodiments will be described.

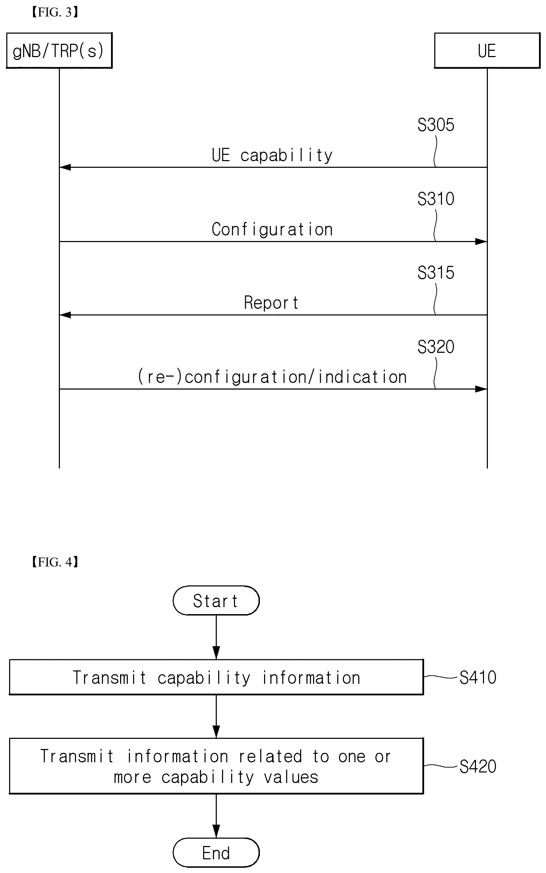

FIG. 3 illustrates a signaling procedure according to an embodiment of the present disclosure.

Specifically, FIG. 3 illustrates an example of a signaling between a user equipment (UE) and a network (NW) based on the above-described proposed method. Here, the UE/NW is just an example, and may be replaced and applied with various devices. FIG. 3 is just for convenience of the description and does not limit the scope of the present disclosure. Further, some step(s) illustrated in FIG. 3 may be omitted according to a situation and/or a configuration.

The base station belonging to the NW in FIG. 3 may correspond to any entity such as base station (BS), node B, TRP, etc.

The UE performs a reporting procedure S305 related to a UE capability value based on the proposed method (e.g., at least one of Method 1, Method 1-1, Method 1-2, Method 1-3, and/or the extended embodiment of Method 1). In such a procedure, range information of the UE capability value may be included and reported to the base station.

The base station performs a configuration for a feature/parameter related to the UE capability value reported in S305 and/or a configuration/indication related to a subsequent S315 UE report based on the proposed method (e.g., at least one of Method 1, Method 1-1, Method 1-2, Method 1-3, and/or the extended embodiment of Method 1) (S310).

The UE reports a UE capability value for a reporting timing or a specific past/future timing based on the report in S305 based on the proposed method (e.g., at least one of Method 1, Method 1-1, Method 1-2, Method 1-3, and/or the extended embodiment of Method 1) (S315).

Based on the report information S315 of the UE, the base station may perform a (re)configuration or indication on the feature/parameter related to the UE capability value (S320).

In application to the operation, (a part of) process S310 may be performed before/after/simultaneously with process S305.

As mentioned above, the above-described NW/UE signaling and operation may be implemented by a device to be described below (in FIG. 6). For example, the NW (or base station) may correspond to a first wireless device and the UE may correspond to a second wireless device and in some cases, an opposite case thereto may also be considered.

For example, the above-described NW/UE signaling and operation may be processed by one or more processors 110 and 210 of FIG. 6, and the above-described NW/UE signaling and operation may be stored in memories 140 and 240 in the form of a command/program (e.g. instruction, executable code) for driving at least one processor 110 or 210 in FIG. 6.

Hereinafter, the above-described embodiments will be described in detail with reference to FIGS. 4 and 5 in terms of the operations of the UE and the base station. Methods to be described below are just distinguished for convenience of description and it is needless to say that some components of any one method may be substituted with some components of another method or may be applied in combination with each other.

FIG. 4 is a flowchart for describing a method performed by a user equipment (UE) according to one embodiment of the present disclosure.

Referring to FIG. 4, a method performed by the UE in the wireless communication system according to an embodiment of the present disclosure includes a capability information transmitting step S410 and a step S420 of transmitting information related to one or more capability values.

In S410, the UE transmits capability information to the base station.

The capability information includes range information related to at least one capability value.

The at least one capability value is related to at least one feature supported by the UE.

As an example, this step may correspond to step 1 in at least one of Exemplary procedures 1 to 3 described above.

The at least one capability value may be based on Method 1. According to an embodiment, the at least one capability value may include a value related to at least one of i) channel state information (CSI), ii) prediction related to the CSI and/or a beam, iii) positioning, and/or iv) a model.

As an example, the value related to the CSI
may include at least one of i) a maximum CSI compression ratio, ii) a maximum payload size for CSI compression, iii) a supported pre/post processing mode, and/or iv) a compression quality indicator.

As an example, the prediction may be related to a time domain or a spatial domain.

The value related to the prediction in the time domain may include at least one of i) a predictable maximum time instance and/or ii) prediction accuracy.

The value related to the prediction in the spatial domain may include at least one of i) a maximum supportable ratio of a first set related to measurement of a reference signal (RS) and a second set of the prediction, and/or ii) a size of the second set.

As an example, the capability value related to the positioning includes a positioning accuracy related metric.

As an example, the value related to the model may include at least one of i) a value related to whether fine-tuning related to the model is supported, ii) a minimum time required for training, update, fine-tuning, switching, or selection of the model, and/or iii) a value related to fallback of a communication function based on the model.

According to an embodiment, the range information may include candidate values, a minimum value(s), and/or a maximum value(s) of the capability defined in Method 1. Specifically, the range information may include at least one of i) candidate values of each capability value, ii) a minimum value of each capability value, and/or iii) a maximum value of each capability value.

The method may further include a step of receiving a configuration based on the capability information. Specifically, the UE receives the configuration based on the capability information from the base station. This step may correspond to Step 2 in at least one of Exemplary procedures 1 to 3 described above. The configuration based on the capability information may include at least one of i) a configuration related to reporting of the one or more capability values and/or ii) an initial configuration related to the at least one feature.

In S420, the UE transmits, to the base station, information related to one or more capability values based on the range information.

As an example, this step may correspond to Step 3 in at least one of Exemplary procedures 1 to 3 described above.

A capability value(s) (actually applied/currently applied/applied at a specific timing) may be reported based on the range information. Hereinafter, this will be specifically described.

According to an embodiment, the one or more capability values based on the range information may include capability value(s) based on each of one or more time instances. The embodiment may be based on Method 1 and/or an extended embodiment of Method 1.

The one or more time instances may be related to at least one of i) a first timing related to transmission of the information (e.g., a reporting timing of a capability value) and/or ii) a second time point which is a predetermined time after the first time point (e.g., a timing after X ms/slot from the reporting timing of the capability value).

The method may further include a step of receiving a configuration based on the one or more capability values. Specifically, the UE receives the configuration based on the one or more capability values from the base station. This step may correspond to Step 4 in at least one of Exemplary procedures 1 to 3 described above. The configuration based on the one or more capability values may include information for a configuration or a reconfiguration related to the at least one feature.

A (initial) setting for a capability value to be applied to/used for the communication function of the UE may be required. In this regard, Methods 1-1 to 1-3 described above may be applied.

According to an embodiment, a lowest capability value among capability values based on the range information may be applied before the transmission of the information related to the one or more capability values. The embodiment may be based on Method 1-1.

According to an embodiment, a capability value related to a fallback mode may be applied before the transmission of the information related to the one or more capability values. The embodiment may be based on Method 1-2.

According to an embodiment, the capability information may further include information related to an initial capability value. The initial capability value may be related to a fallback mode. The embodiment may be based on Method 1-3.

Operations based on S410, S420, the step of receiving the configuration based on the capability information, and the step of receiving the configuration based on the one or more capability values described above may be implemented by a device of FIG. 6. For example, the UE 200 may control the one or more transceivers 230 and/or the one or more memories 240 to perform operations based on S410, S420, the step of receiving the configuration based on the capability information, and the step of receiving the configuration based on the one or more capability values.

Hereinafter, the embodiments described above will be specifically described in terms of the operation of the base station.

Steps S510 and S520, a step of transmitting the configuration based on the capability information, and a step of transmitting the configuration based on the one or more capability values described below correspond to S410 and S420, the step of receiving the configuration based on the capability information, and the step of receiving the configuration based on the one or more capability values described in FIG. 4. By considering the correspondence relationship, redundant descriptions are omitted. That is, a specific description of the base station operation described below may be replaced with the description/embodiment of FIG. 5 corresponding to the corresponding operation.

As an example, the description/embodiment of 410 and to S420 of FIG. 4 may be additionally applied to base station operations of S510 and S520 described below.

The description/embodiment of the step of receiving the configuration based on the capability information and the step of receiving the configuration based on the one or more capability values may be additionally applied to the base station operations of the step of transmitting the configuration based on the capability information and the step of transmitting the configuration based on the one or more capability values described below.

FIG. 5 is a flowchart for describing a method performed by a base station according to another embodiment of the present disclosure.

Referring to FIG. 5, a method performed by the base station in the wireless communication system according to another embodiment of the present disclosure includes a capability information receiving step S510 and a step S520 of receiving information related to one or more capability values.

In S510, the base station receives capability information from the UE. The capability information includes range information related to at least one capability value. The at least one capability value is related to at least one feature supported by the UE.

The method may further include a step of transmitting the configuration based on the capability information. Specifically, the base station transmits the configuration based on the capability information to the UE.

In S520, the base station receives, from the UE, information related to one or more capability values based on the range information.

The method may further include a step of transmitting the configuration based on the one or more capability values. Specifically, the base station transmits the configuration based on the one or more capability values to the UE.

Operations based on S510 and S520, the step of transmitting the configuration based on the capability information, and the step of transmitting the configuration based on the one or more capability values described above may be implemented by the device of FIG. 6. For example, the base station 100 may control the one or more transceivers 130 and/or the one or more memories 140 to perform operations based on S510 and S520, the step of transmitting the configuration based on the capability information, and the step of transmitting the configuration based on the one or more capability values.

A device to which an embodiment of the present disclosure is applicable (a device implementing the method/operation according to an embodiment of the present disclosure) is described below with reference to FIG. 6.

FIG. 6 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in a wireless communication system, the method comprising:
transmitting capability information,
wherein the capability information includes range information related to at least one capability value, and the at least one capability value is related to at least one feature supported by the UE; and
transmitting information related to one or more capability values based on the range information.

2. The method of claim 1, wherein the at least one capability value includes a value related to at least one of i) channel state information (CSI), ii) prediction related to the CSI and/or a beam, iii) positioning, and/or iv) a model.

3. The method of claim 2, wherein the value related to the CSI includes at least one of i) a maximum CSI compression ratio, ii) a maximum payload size for CSI compression, iii) a supported pre/post processing mode, and/or iv) a compression quality indicator.

4. The method of claim 2, wherein the prediction is related to a time domain or a spatial domain.

5. The method of claim 4, wherein the value related to the prediction in the time domain includes at least one of i) a predictable maximum time instance and/or ii) prediction accuracy.

6. The method of claim 4, wherein the value related to the prediction in the spatial domain includes at least one of i) a maximum supportable ratio of a first set related to measurement of a reference signal (RS) and a second set of the prediction, and/or ii) a size of the second set.

7. The method of claim 2, wherein the capability value related to the positioning includes a positioning accuracy related metric.

8. The method of claim 2, wherein the value related to the model includes at least one of i) a value related to whether fine-tuning related to the model is supported, ii) a minimum time required for training, update, fine-tuning, switching, or selection of the model, and/or iii) a value related to fallback of a communication function based on the model.

9. The method of claim 1, wherein the range information includes at least one of i) candidate values of each capability value, ii) a minimum value of each capability value, and/or iii) a maximum value of each capability value.

10. The method of claim 1, wherein one or more capability values based on the range information include a capability value based on each of one or more time instances.

11. The method of claim 10, wherein the one or more time instances are related to at least one of i) a first time point related to transmission of the information and/or ii) a second time point which is a predetermined time after the first time point.

12. The method of claim 1, further comprising:
receiving a configuration based on the capability information.

13. The method of claim 12, wherein the configuration based on the capability information includes at least one of i) a configuration related to reporting of the one or more capability values and/or ii) an initial configuration related to the at least one feature.

14. The method of claim 1, further comprising:
receiving a configuration based on the one or more capability values,
wherein the configuration based on the one or more capability values includes information for a configuration or a reconfiguration related to the at least one feature.

15. The method of claim 1, wherein a lowest capability value among capability values based on the range information is applied before the transmission of the information related to the one or more capability values.

16. The method of claim 1, wherein a capability value related to a fallback mode is applied before the transmission of the information related to the one or more capability values.

17. The method of claim 1, wherein the capability information further includes information related to an initial capability value, and
wherein the initial capability value is related to a fallback mode.

18. A user equipment operating in a wireless communication system, the user equipment comprising:
one or more transceivers;
one or more processors; and
one or more memories connected to the one or more processors and storing instructions,
wherein the instructions configure the one or more processors to perform all steps of a method according to any one of claims 1 to 17 based on being executed by the one or more processors.

19. A device comprising:
one or more memories; and
one or more processors operably connected to the one or more memories,
wherein the one or more memories store instructions that configure the one or more processors to perform all steps of a method according to any one of claims 1 to 17 based on being executed by the one or more processors.

20. One or more non-transitory computer readable mediums storing instructions,
wherein the instructions executable by one or more processors configure the one or more processors to perform all steps of a method according to any one of claims 1 to 17.

21. A method performed by a base station in a wireless communication system, the method comprising:
receiving capability information,
wherein the capability information includes range information related to at least one capability value, and the at least one capability value is related to at least one feature supported by a UE; and
receiving information related to one or more capability values based on the range information.

22. A base station operating in a wireless communication system, the base station comprising:
one or more transceivers;
one or more processors; and
one or more memories connected to the one or more processors and storing instructions,
wherein the instructions configure the one or more processors to perform all steps of a method according to claim 21 based on being executed by the one or more processors.
